# EUROPEAN PATENT SPECIFICATION

(11) **EP 2 910 484 B1**
(45) Date of publication and mention of the grant of the patent: **11.01.2017**
(21) Application number: 15156162.8
(22) Date of filing: 23.02.2015
(51) Int. Cl.: B65D 6/26, B65D 6/24

(54) **Fastener for dismountably assembling laminar elements**
Verschluss zur demontierbaren Montage laminarer Elemente
Fixation pour des éléments laminaires d'assemblage démontables

(30) Priority: 24.02.2014 ES 201430252; 14.03.2014 ES 201430355
(43) Date of publication of application: 26.08.2015
(73) Proprietor: Zamar Campos, Jose, 36680 Pontevedra (ES)
(72) Inventor: Zamar Campos, Jose, 36680 Pontevedra (ES)
(74) Representative: Del Valle Valiente, Sonia

(56) References cited:
- EP-A1- 2 110 334
- DE-A1- 4 207 515
- ES-A1- 2 538 017
- US-A- 2 190 433
- US-A1- 2011 309 072

## Description

### OBJECT OF THE INVENTION

The present invention refers to a fastener for dismountably assembling laminar elements, which may be similar or different; the fastener may be used in laminar elements making up a box or container for transporting wine bottles, transporting foodstuff such as fruits or vegetables, transporting milk containers, etc.

### PRIOR ART

Boxes or container assemblies for several uses, such as for transporting fruits and vegetables, comprising a number of essentially laminar elements - making up the bottom and lateral walls - which may be dismountably assembled by means of fasteners comprising grooves and tongues connected to said bottom and/or lateral walls, are known; these boxes may therefore incorporate lids, supports, connecting means with other similar boxes for piling them up, etc.

Since these boxes or containers are made by a number of dismountable elements, they only take up an essentially planar space when stored or transported, this space being much lower in comparison with the space needed when they are in a mounted position, thus minimizing the corresponding costs.

For example, the dismountable box disclosed in European patent application EP0154558 is known; said application discloses a dismountable container in the form of a box having a plurality of lateral walls and a base, as well as dismountable connection means between these elements. The dismountable connection means comprise tongues that enter into grooves, said tongues having a harpoon-like end retention lip whose width is greater than the corresponding groove dimension.

A dismountable box with a fastener according to the preamble of claim 1 is known from US 2,190,433 A1.

This configuration of the fastener is disadvantageous in that once the boxes or containers are assembled, when they are piled ones on top of others filled with a product for being stored and transported, the lower rows - those supporting the
weight of all the rest - do not resist the weight or the way they are usually manipulated; thus, a big part of the product arrives at destination in a totally destroyed state, and losses arise.

Additionally, repeated operations of assembly and disassembly cause wear, deformation, and loss of resistance both in the retention lip and in the groove, the fastening becoming insufficient. For this reason, when the product is transported (ground transportation and sea transportation) a big part of the boxes or containers do not resist such conditions, the product arriving at destination being totally destroyed, and losses also arise.

Generally speaking, perimeter fasteners are not very disassembly-proof, because the fastened parts necessarily must bend for their mutual introduction; this fact poses a limitation on their size, which is too small for ensuring a proper retention capability against traction stress arising due to the weight of the product, subsequent piling and transport thereof; additionally, the bending step forces the inclusion of other systems for retaining the parts, which otherwise would become disassembled because of the bending, and in case a higher number of holes are used the structure of the material is weakened. In other cases, no retention system is provided at the bottom, this causing the bottom of big containers to detach very easily.

### DESCRIPTION OF THE INVENTION

The fastener for dismountably assembling laminar elements of the invention has a configuration solving the above technical problems, since those components subject to traction are not introduced by bending; this allows for them to have a bigger size, such that a better retention capability and no weakening are achieved.

According to the invention, the fastener comprises, at least, a tongue having a widened head and having a neck, which is located in one of the elements to be assembled, and at least one groove designed to receive said neck located in the other element to be assembled, this groove having a width that is between the width of the neck and the width of the widened head; and said groove having, at least, an open side, where a resiliently displaceable retainer is provided.

The retainer bends allowing for the introduction of the tongue's head so that the neck is located at the groove, and it then returns to position having the only function of holding the neck in the groove; the retainer exerts the same traction as the product charge once placed in the container. Thus, a greater resistance is obtained and advantage is taken of the resistance of the material used for the assembly, an excess of holes weakening the structure of the material is avoided, the resultant container being rigidly assembled and completely resistant when piled up and transported.

The retainer ideally comprises a strip having a resiliently displaceable free end adjacent each open side of the corresponding groove, and another end directly or indirectly rigidly connected to the laminar element where the groove is located.

This fastening may be used in plastic, wood, derivatives thereof such as wood fiber board, plywood, cardboard, etc. Even for assembling-joining parts having a greater resistance, made of metals such as steel, for avoiding the need to use soldering or riveting.

This fastener is satisfactory as to providing for a solid and consistent assembly; however, there are certain limitations in connection with the opening of the lid and the assembly and disassembly thereof. Indeed, the proposed fastener configuration may not be used for the lids of the containers, since that would make the disassembly of the lid for having access to the product inside almost impossible.

Similarly, there is no known fastening system really solving this problem, this fact causing the lids of these containers to be either very easily to open, thus not ensuring the content inside has not been manipulated, or else to have an additional element such as nails, staples, glue, etc. for ensuring also a proper resistance against the lid that the product itself exerts on the lid during transport. These additional elements make opening difficult and prevent the container and/or the lid from being reused.

Additionally, using other elements made of a different material than the container for ensuring a proper closure complicates recycling. For this reason, and because they are difficult to use, these additional elements are not generally used. This causes that the closure or fastening systems for the lids of these containers do not guarantee that the product has not been inappropriately manipulated without it being detected.

In view of this, an improved fastener is also disclosed where the strip additionally has a tearable end sector defined by weakened lines, whose size allows for the extraction movement of the tongue but whose weakened lines offer a mechanical resistance higher than that needed for bending the strip when assembling the fastener.

This implies the tearable sector must be broken in order to open the lid, such that any inappropriate opening thereof is detected.

For assembling the fastener when mounting the lid, the lid can bend without the need to break its tearable end sector, because the mechanical strength of the weakened lines is not exceeded. To open the lid, the necessary force to break this end sector must be applied such that the tongue is set free to uncouple its neck from the groove and it is extracted through the hole created when the tearable end sector is detached.

Similarly, the improved fastener comprises providing cuts in the laminar element where the tongue is located, specifically adjacent the point where it is detached, for allowing for a lateral bending thereof when coupling and uncoupling the fastener. Thus, this part of the fastener may be used as many times as necessary. Additionally, the lid is allowed to be freely placed and extracted once the seal is broken, when the container has arrived at is destination; the product is thus protected, although the seal breakage detection function achieved by the tearable sector of the strip is no longer in use.

### DESCRIPCIÓN DE LOS DIBUJOS

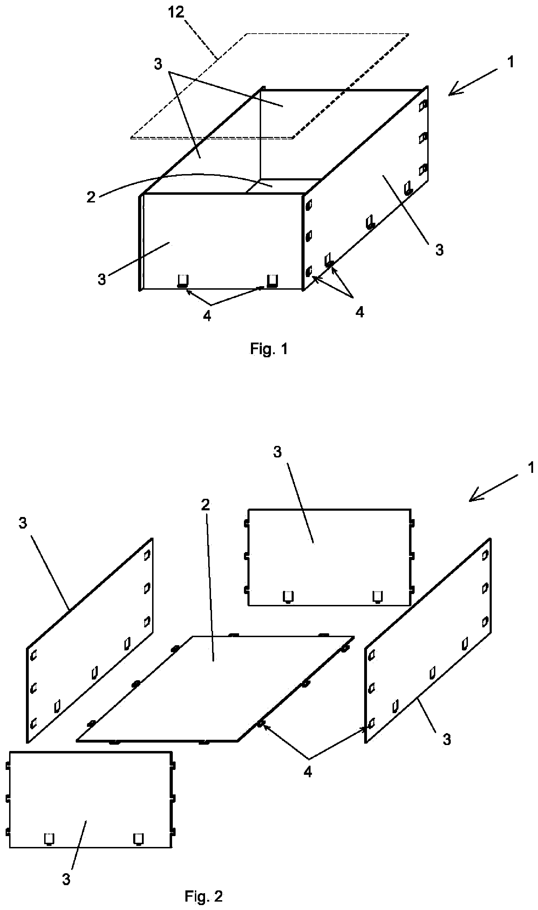

Figure 1 shows a view of a box having the fasteners of the invention.
Figure 2 shows an exploded view of the box of figure 1.
Figure 3 shows a detail of the fastener of the invention.
Figures 4 and 5 show respective cross-section details of the introduction of the neck of the tongue in the groove of the fastener of the invention.
Figure 6 shows a plan view of figure 5.
Figure 7 shows an enlarged view of an improved fastener according to the invention.
Figure 8 shows a lateral cross-section of the lid of the box with the improved fastener in an assembled state.
Figures 9 and 10 show respective cross-section details of the introduction of the neck of the tongue in the groove of the improved fastener.
Figures 11 to 13 show respective cross-section details of the breakage of the tearable end sector of the improved fastener for extracting the lid of the box.

### PREFERRED EMBODIMENT OF THE INVENTION

The fastener (4) of the invention may be used for dismountably assembling laminar elements, such as the bottom (2) and lateral (3) walls of the box (1) shown in the figures, which may also have a lid (12), supports or mounts for piling up, etc.

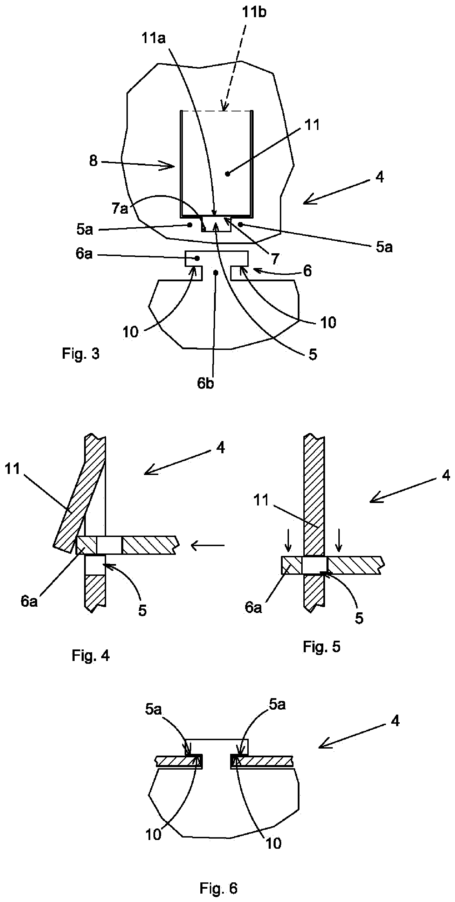

According to the invention, the fastener comprises, at least, a tongue (6) having a widened head (6a) defining a neck (6b), located in one of the elements to be assembled and, at least, a groove (5) designed for receiving said neck (6b) located in the other element to be assembled, the groove (5) having a width of between the width of the neck (6b) and the width of the widened head (6a), the groove (5) having, at least, an open side (7) where a resiliently displaceable retainer (8) is located. Ideally, the groove (5) comprises a closed side (7a) opposite to the open side (7), as seen in figures 3 to 5, although two opposite open sides (7) may be provided, this variation not being represented in the figures.

The tongues (6) having a widened head (6a) ideally have a general T or anchor shape, as seen in details in figures 3 and 4, having contact faces (10) parallel to the contact edges (5a) of the grooves (5), and a width which is ideally equal or slightly lower - depending on the acceptable tolerances - to the transversal lumen of the groove (5). This configuration achieves an effective retention capability and does not require having harpoon-like inclined sides that reduce and weaken the working section of the widened head.

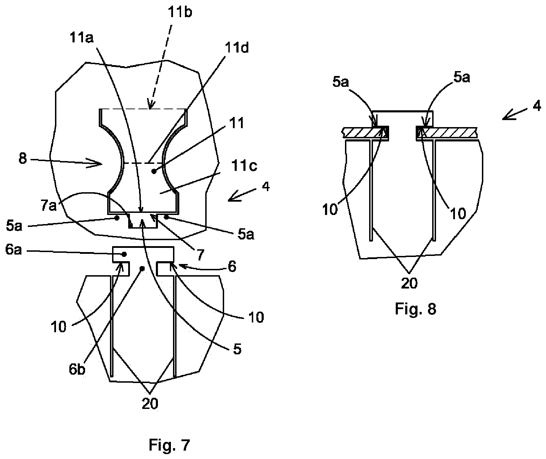

The retainer (8) comprises a strip (11) having a resiliently displaceable free end (11 a) which is adjacent the open side (7a) of the corresponding groove (5), and another end (11 b) rigidly connected directly or indirectly to the element where the groove (5a) is located. The width of the strip is slightly greater than the width of the widened head (6a) of the corresponding tongue (6), thus allowing for the passage thereof and the placement of the neck (6b) in the groove (5). This width need only be maintained in the zone of introduction of the widened head, and it may be reduced in other parts thereof; for example, figure 7 shows the strip (11) having width variations, but the width in the zone where the widened head (6a) passes is slightly greater than the width thereof.

On the other hand, the retainers (8) and/or the tongues (6) may be produced by die-cutting in monoblock configuration of the boards or laminar elements making up the bottom (2) and/or the lateral walls (3) of the box (1) to be assembled. These laminar elements are preferably made of materials such as plastic, wood, derivatives thereof such as wood fiber board, plywood, cardboard, etc. Even metals such as steel for avoiding the need to use soldering, riveting, etc.

Now, an improved fastener (4) is disclosed making reference to figures 7 to 13. In this improved fastener, strip (11) additionally has a tearable end sector (11c) defined by weakened lines (11d), having a size allowing for the extraction movement of the tongue (6). Figure 6 shows the weakened line (11d) located in the narrow zone of the strip (11), such that detachment of the tearable sector (11c) clears out the zone having a width slightly greater than the width of the widened head (6a), thus allowing for it to come out by means of bending the tongue (6) as shown in figure 8, while the weakened lines (11d) have a mechanical resistance that is higher than that needed to bend the strip (11) when assembling the fastener (4).

Specifically for improving the bending capability of the tongue (6), both when assembling the fastener and when disassembling it once the tearable end sector (11c) is detached, the invention comprises the laminar element making up the tongue (6) having cuts (20) near the detachment zone of said tongue (6).

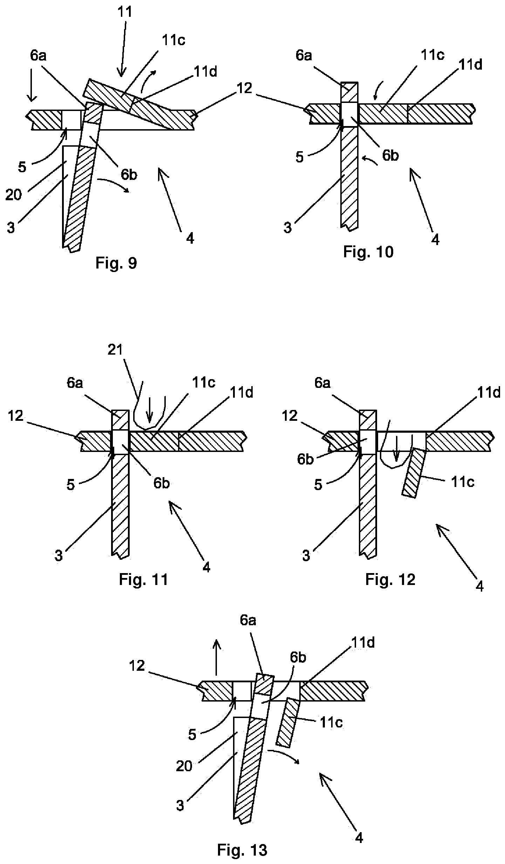

Finally, in order to avoid the use of tools and to make detachment of the tearable sector (11c) easier, said tearable sector (11c) may have a surface slightly greater than the surface of a finger (21), in order to allow for a direct application of pressure as seen in figures 11 and 12.

Once the nature of the invention is sufficiently described, it is noted that the description and the preferred embodiment thereof must not be interpreted to be limitative, and it encompasses all possible embodiment variations derived from the content of the present specification and drawings.

## Claims

1. Fastener (4) for dismountably assembling laminar elements such as the bottom (2) and lateral (3) walls of containers, boxes (1) and the like, comprising,
- at least, a tongue (6) having a widened head (6a) defining a neck (6b), which is located in a first element to be assembled and,
- at least, a groove (5) intended for receiving said neck (6b), located in a second element to be assembled, and whose width is comprised between the width of the neck (6b) and the width of the widened (6a) head; the groove (5) having, at least, a side (7) where a resiliently displaceable retainer (8) is provided,
- where the retainer (8) comprises a strip (11) having a resiliently displaceable free end (11 a) adjacent side (7) of the corresponding groove (5), and another end (11 b) rigidly connected to the second element,
- **characterized in that** additionally the strip (11) has a tearable end sector (11c) defined by weakened lines (11 d) and having a size that allows for the extraction movement of the tongue (6); the weakened lines (11 d) having a mechanical resistance higher than that necessary for bending the strip (11) when assembling the fastener (4); and where the laminar element having the tongue (6) comprises cuts (20) near the detachment point of said tongue (6) intended for allowing for its lateral bending when coupling and uncoupling the fastener (4).

2. Fastener (4) for dismountably assembling laminar elements according to claim 1, where the tongue (6) having a widened head (6a) has a general T or anchor shape, having contact faces (10) parallel to the contact edges (5a) with the groove (5).

3. Fastener (4) for dismountably assembling laminar elements according to any of the previous claims, where the width of the strip (11) is slightly greater than the width of the widened head (6a) of the corresponding tongue (6).

4. Fastener (4) for dismountably assembling laminar elements according to any of the previous claims, where the tearable sector (11c) has a surface that is slightly higher than the surface of a finger (21).

5. Fastener (4) for dismountably assembling laminar elements according to any of the previous claims, where the retainers (8) are produced by die-cutting in monoblock configuration of the laminar element.

6. Fastener (4) for dismountably assembling laminar elements according to any of the previous claims, where the tongues (6) are produced by die-cutting in monoblock configuration of the laminar element.

7. Fastener (4) for dismountably assembling laminar elements according to any of claims 5-6, **characterized in that** the elements to be assembled are made of a material selected between: plastic, wood, wood derivatives, plywood, cardboard and/or metal.

## Patentansprüche

1. Verschluss (4) zur demontierbaren Montage von Schichtelementen wie der Bodenwand (2) und den Seitenwänden (3) von Behältern, Kisten (1) und Ähnlichem, umfassend:
- mindestens eine Lasche (6) mit einem verbreiterten Kopf (6a), die einen Hals (6b) definiert, die sich in einem ersten zu montierenden Element befindet, und
- mindestens eine zum Aufnehmen des Halses (6b) bestimmte Aussparung (5), die sich in dem zweiten zu montierenden Element befindet und deren Breite zwischen der Breite des Halses (6b) und der Breite des verbreiterten Kopfs (6a) liegt; wobei die Aussparung (5) mindestens eine Seite (7) aufweist, wo ein elastisch auslenkbarer Halter (8) vorgesehen ist,
- wobei der Halter (8) einen Streifen (11) mit einem elastisch auslenkbaren freien Ende (11a) angrenzend an die Seite (7) der entsprechenden Aussparung (5) und einem weiteren Ende (11 b) umfasst, das starr mit dem zweiten Element verbunden ist,
- **dadurch gekennzeichnet, dass** der Streifen (11) zusätzlich einen aufreißbaren Endabschnitt (11c) aufweist, der durch geschwächte Linien (11 d) definiert ist und eine Größe aufweist, die die Herausziehbewegung der Lasche (6) zulässt; wobei die geschwächten Linien (11d) eine mechanische Festigkeit aufweisen, die größer ist, als zum Biegen des Streifens (11) beim Zusammensetzen des Verschlusses (4) notwendig ist; und wobei das laminare Element mit der Lasche (6) Einschnitte (20) in der Nähe der Ablösestelle der Lasche (6) umfasst, die beim Schließen und Öffnen des Verschlusses (4) für ihre Biegung zur Seite bestimmt sind.

2. Verschluss (4) zur demontierbaren Montage von Schichtelementen nach Anspruch 1, wobei die Lasche (6) mit einem verbreiterten Kopf (6a) eine allgemeine T- oder Ankerform aufweist, mit Kontaktflächen (10) parallel zu den Kontakträndern (5a) mit der Aussparung (5).

3. Verschluss (4) zur demontierbaren Montage von Schichtelementen nach einem der vorhergehenden Ansprüche, wobei die Breite des Streifens (11) etwas größer ist als die Breite des verbreiterten Kopfs (6a) der entsprechenden Lasche (6).

4. Verschluss (4) zur demontierbaren Montage von Schichtelementen nach einem der vorhergehenden Ansprüche, wobei der aufreißbare Abschnitt (11 c) eine Fläche aufweist, die etwas größer ist als die Fläche eines Fingers (21).

5. Verschluss (4) zur demontierbaren Montage von Schichtelementen nach einem der vorhergehenden Ansprüche, wobei die Halter (8) durch Stanzen des laminaren Elements in Einstückkonfiguration hergestellt werden.

6. Verschluss (4) zur demontierbaren Montage von Schichtelementen nach einem der vorhergehenden Ansprüche, wobei die Laschen (6) durch Stanzen des laminaren Elements in Einstückkonfiguration hergestellt werden.

7. Verschluss (4) zur demontierbaren Montage von Schichtelementen nach einem der Ansprüche 5 bis 6, **dadurch gekennzeichnet, dass** die zu montierenden Elemente aus einem Material gefertigt sind, das ausgewählt ist aus: Kunststoff, Holz, Holzderivate, Sperrholz, Karton und/oder Metall.

## Revendications

1. Fixation (4) pour l'assemblage démontable d'éléments stratifiés tels que les parois de fond (2) et latérales (3) de contenants, boîtes (1) et similaires, comprenant
- au moins, une languette (6) comportant une tête élargie (6a) définissant un col (6b), qui est située dans un premier élément à assembler et,
- au moins, une rainure (5) destinée à recevoir ledit col (6b), située dans un second élément à assembler, et dont la largeur est comprise entre la largeur du col (6b) et la largeur de la tête élargie (6a) ; la rainure (5) comportant, au moins, un côté (7) dans lequel se trouve un élément de retenue (8) déplaçable de manière résiliente,
- l'élément de retenue (8) comprenant une bande (11) comportant une extrémité libre (11a) déplaçable de manière résiliente adjacente au côté (7) de la rainure (5) correspondante, et une autre extrémité (11 b) reliée de manière rigide au second élément,
- **caractérisée en ce que**, en outre, la bande (11) comporte une portion d'extrémité déchirable (11c) définie par des lignes affaiblies (11 d) et présentant une taille qui permet le mouvement d'extraction de la languette (6) ; les lignes affaiblies (11d) présentant une résistance mécanique supérieure à celle nécessaire pour fléchir la bande (11) lors de l'assemblage de la fixation (4) ; et l'élément stratifié avec la languette (6) comprenant des découpes (20) près du point de détachement de ladite languette (6) destinées à permettre sa flexion latérale lors du couplage et du découplage de la fixation (4).

2. Fixation (4) pour l'assemblage démontable d'éléments stratifiés selon la revendication 1, dans laquelle la languette (6) comportant une tête élargie (6a) présente une forme générale de T ou d'ancre, qui comporte des faces de contact (10) parallèles aux bords de contact (5a) avec la rainure (5).

3. Fixation (4) pour l'assemblage démontable d'éléments stratifiés selon l'une quelconque des revendications précédentes, dans laquelle la largeur de la bande (11) est légèrement supérieure à la largeur de la tête élargie (6a) de la languette (6) correspondante.

4. Fixation (4) pour l'assemblage démontable d'éléments stratifiés selon l'une quelconque des revendications précédentes, dans laquelle la portion déchirable (11c) comporte une surface qui est légèrement plus grande que la surface d'un doigt (21).

5. Fixation (4) pour l'assemblage démontable d'éléments stratifiés selon l'une quelconque des revendications précédentes, dans laquelle les éléments de retenue (8) sont fabriqués par découpage à l'emporte-pièce en configuration monobloc de l'élément stratifié.

6. Fixation (4) pour l'assemblage démontable d'éléments stratifiés selon l'une quelconque des revendications précédentes, dans laquelle les languettes (6) sont fabriquées par découpage à l'emporte-pièce en configuration monobloc de l'élément stratifié.

7. Fixation (4) pour l'assemblage démontable d'éléments stratifiés selon l'une quelconque des revendications 5 et 6, **caractérisée en ce que** les éléments à assembler sont fabriqués en un matériau choisi parmi : le plastique, le bois, les dérivés du bois, le contreplaqué, le carton et/ou le métal.
